(19) Europäisches Patentamt
European Patent Office
Office européen des brevets

(11) EP 1 847 826 A1

(12) EUROPEAN PATENT APPLICATION

(43) Date of publication:
24.10.2007 Bulletin 2007/43

(51) Int Cl.:
*G01N 21/23* (2006.01)

(21) Application number: 07007779.7

(22) Date of filing: 17.04.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK YU

(30) Priority: 17.04.2006 JP 2006113356

(71) Applicant: FUJIFILM Corporation
Minato-ku
Tokyo (JP)

(72) Inventors:
• Ikehata, Kousuke
Odawara-shi
Kanagawa (JP)
• Shigeta, Bungo
Odawara-shi
Kanagawa (JP)
• Shimoda, Tomoyuki
Odawara-shi
Kanagawa (JP)

(74) Representative: HOFFMANN EITLE
Patent- und Rechtsanwälte
Arabellastrasse 4
81925 München (DE)

(54) **Birefringence measurement apparatus**

(57) A birefringence measurement apparatus (10) including a projector (12) and a light receiver (14). The light source unit (22) of the projector (12) includes a light splitting filter (32) splitting light beams emitted from an LED (26), a light condensing device (28) condensing the light beams emitted from the LED (26), and a parallel light forming device (30,34) converting the condensed light beams into parallel light.

FIG.2

**Description**

BACKGROUND OF THE INVENTION

Field of the Invention

The present invention relates to a birefringence measurement apparatus, and particularly relates to an improved art of a light source unit of a birefringence measurement apparatus which measures birefringence of optical films such as an optical compensation film and a protective film which are used for liquid crystal displays.

Description of the Related Art

Optical films are used as a view angle enlarging film and a protective film of liquid crystal displays. A view angle enlarging film is required to exhibit predetermined birefringence, and a protective film is required to exhibit no birefringence. Accordingly, the manufacture lines which manufacture these optical films require birefringence measurement apparatuses which measure the birefringence of optical films by either online measurement or off-line measurement.

As a conventional birefringence measurement apparatus, for example, Japanese Patent Application Laid-Open No. 6-229912 and Japanese Patent Application Laid-Open No. 8-327498 are cited. A birefringence measurement apparatus of Japanese Patent Application Laid-Open No. 6-229912 is constructed by providing detectors which detect transmittances with respect to three kinds or more of polarized light differing in polarizing direction, and a calculating device which calculates the direction of a principle refraction index and a degree of orientation of a transparent film from the detection values of these detectors, and uses an electric lamp light source as a measurement light source. A birefringence measurement apparatus of Japanese Patent Application Laid-Open No. 6-229912 includes an optical system and a data acquiring system, and uses a laser light source as a measurement light source.

Broadly categorizing the measurement light sources of birefringence measurement apparatuses like this, a light source combining He-Ne laser (single wavelength) or an electric lamp light source such as a halogen lamp or a Xe (xenon) lamp in with a monochromator or a light splitting filter is generally used. Which measurement light source should be used depends on the concept and the measuring method of a measurement apparatus. Generally, use of an electric lamp light source has the characteristics of enabling measurement of birefringence at various wavelengths and enhancing the value of the apparatus, and being safe and easily assembling an optical system as compared with a laser light source. On the other hand, with use of a laser light source, a measurement method utilizing the characteristic of coherence of laser light such as a heterodyne interferometry can be used, and in a PEM method, complete monochromaticity and fineness of a beam diameter favor measuring performance.

However, since the birefringence measurement apparatus in Japanese Patent Application Laid-Open No. 6-229912 uses an electric lamp light source for a measurement light source, the life of the light source is as short as about 2000 hours, and the measurement light source has to be replaced once in a two to three months. Since the birefringence measurement apparatus is disposed in the manufacture line placed in a clean room, one has to replace the measurement light source by changing one's clothes to the special clothes for the clean room, and it causes the problem that the replacement operation is troublesome. Further, after the measurement light source is replaced, readjusting operations such as offset measurement for adjusting the distribution of light to a plurality of light projection spots, and calibration measurement for adjusting accuracy and repeatability by using a standard sample are required. Luminance of the electric lamp light source lowers day by day, and in order to perform measurement with high accuracy, readjustment operation has to be performed once in two days, and there arises the problem of being poor in maintainability.

Meanwhile, the birefringence measurement apparatus of Japanese Patent Application Laid-Open No. 8-327498 uses the laser light source, and the life of the light source is two to three years and long as compared with the electric lamp light source, but laser light has not only the problem in safety, but also disadvantage that output variation easily occurs. The laser light also has the problem of requiring strict accuracy in a device alignment on assembly of the optical system.

As above, the electric lamp light source and the laser light source have both merits and demerits. The measurement light sources of both of them have the problem of the life of the light source, and they require the readjustment operation accompanying replacement of the light sources. Therefore, they need to be improved in maintainability.

SUMMARY OF THE INVENTION

The present invention is made in view of the above circumstances, and has an object to provide a birefringence measurement apparatus which can increase the life of a measurement light source to be semi-permanent, can therefore eliminate a replacement operation of the measurement light source, can enhance maintainability dramatically, and can obtain measurement accuracy equal to that by the apparatus using a He-Ne laser light source.

In order to attain the above described object, a first aspect of the present invention provides, in a birefringence measurement apparatus including a projector and a light receiver, a birefringence measurement apparatus characterized in that a light source unit of the projector includes an LED, a light splitting device which splits light beams emitted from the LED, a light condensing device which condenses light beams emitted from the LED, and a parallel light forming device which converts the condensed light beams into parallel light.

There are two reasons why LEDs (light emitting diodes) have not been used so far as the measurement light source of the birefringence measurement apparatus. The first reason is that the emission wavelength width of an LED is broad, and therefore, a precise wavelength cannot be specified. Namely, the measurement result of birefringence changes according to the wavelength, and therefore, a birefringence value becomes meaningless unless at which wavelength the birefringence value is measured is specified. For this reason, there is the tendency to use a He-Ne laser light source having a single wavelength and being capable of specifying wavelength precisely by preference. The second reason is that an LED has been considered to be small in light quantity and incapable of being used as the light source of a birefringence measurement apparatus.

According to the first aspect of the invention, replacement of the light source is made unnecessary by using an LED having a semi-permanent life, and the problem concerning the wavelength width and light quantity by use of the LED is solved by combining a light splitting device, a light condensing device and a parallel light forming device with the LED. Namely, by limiting the wavelength by splitting the light beams emitted from the LED with the light splitting device, a precise measurement wavelength (dominant wavelength) can be obtained from the light beams of the LED which is broad in wavelength width. Thereby, the problem of the wavelength of the LED can be solved, and therefore, measurement accuracy equal to that by a He-Ne laser light source can be obtained.

After the light beams from the LED are once condensed with the light condensing device to enhance the use efficiency of the luminous flux, the light beams are returned to parallel light with the parallel light forming device, and thereby, the small light quantity of the LED can be overcome. As the condensing device, a plano-convex lens can be preferably used. As the parallel light forming device, a telecentric optical system in which a pin hole (aperture stop) is disposed at the focal position of the lens can be preferably used.

Thereby, the birefringence measurement apparatus of the present invention can increase the life of the measurement light source to be semi-permanent. Therefore, replacement operation of the measurement light source can be eliminated to be able to enhance maintainability dramatically, and measurement accuracy equal to that by the apparatus using a He-Ne laser light source can be obtained.

A second aspect is, in the first aspect, characterized in that a photoelectron multiplying device is provided in the light receiver.

According to the second aspect, the photoelectron multiplying device (for example, PMT...photomultiplier tube) is provided in the light receiver, and therefore, the problem that the light quantity of the LED is small can be further eliminated in cooperation with the condensing device of the first aspect.

A third aspect is, in the first or the second aspect, characterized in that a phase difference detecting method of the birefringence measurement apparatus is any one of a parallel nicols rotative analyzer method, a rotative analyzer method, and a Senarmont method.

The present invention is an art relating to the improvement of the light source unit of a birefringence measurement apparatus, and various kinds of conventional phase difference detection methods can be applied.

The parallel nicols rotative analyzer method is the method for measuring the transmission light intensity at the azimuth of 360° by interposing a film to be measured between a polarizer and an analyzer while keeping the polarizer and the analyzer parallel, and this method detects a phase difference as a change in light intensity. The rotative analyzer method gives circularly polarized light beams to the film to be measured, and continuously rotates only the analyzer at about 30 rps. Then, this method calculates the phase difference from the intensity of the specified frequency by using the Fourier analysis for the measured light intensity. The Senarmont method is the method for detecting a phase difference at the azimuth of the linear polarized light by using the characteristic that elliptically polarized light returns to linearly polarized light when the main axis of the $\lambda/4$ plate is aligned with the main axis of the elliptically polarized light.

According to the birefringence measurement apparatus of the present invention, the life of the measurement light source can be increased to be semi-permanent, and therefore, the replacement operation of the measurement light source can be eliminated. Thereby, the readjustment operations at the time of replacement of the light source such as offset measurement and calibration measurement are not required, and therefore, maintainability can be remarkably enhanced. In spite of using the LED, measurement accuracy equal to that by the apparatus using a He-Ne laser light source can be obtained.

BRIEF DESCRIPTION OF THE DRAWINGS

Fig. 1 is a conceptual diagram of an entire constitution of a birefringence measurement apparatus of the present invention;

Fig. 2 is a general view of an optical system of the birefringence measurement apparatus of the present invention;

Fig. 3 is a relational graph of ambient temperature and a dominant wavelength, after LED light beams are passed through a light splitting filter;

Fig. 4 is an explanatory view explaining a rotative analyzer method;

Fig. 5 is a general view in which the birefringence measurement apparatus of the present invention is incorporated into the manufacture line of an optical compensation film;

Fig. 6 is an explanatory diagram explaining a measuring method of the birefringence measurement apparatus of the present invention;

Fig. 7 is an explanatory diagram explaining the measuring method of the birefringence measurement apparatus of the present invention;

Fig. 8 is a diagram showing a determinant;

Fig. 9 is an explanatory diagram explaining the wavelength of the LED used in the example; and

Fig. 10 is a result table comparing the birefringence measurement apparatus using the LED of the present invention and the birefringence measurement apparatus (comparative apparatus) using the conventional He-Ne laser light source.

DETAILED DESCRIPTION OF THE PREFERRED EMBODIMENT

A preferred embodiment of a birefringence measurement apparatus of the present invention will now be described in detail in accordance with the attached drawings.

(Entire Birefringence Measurement Apparatus)

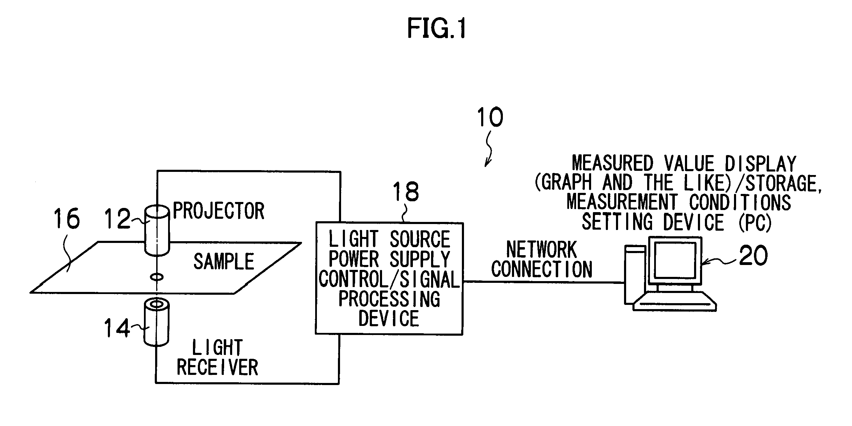

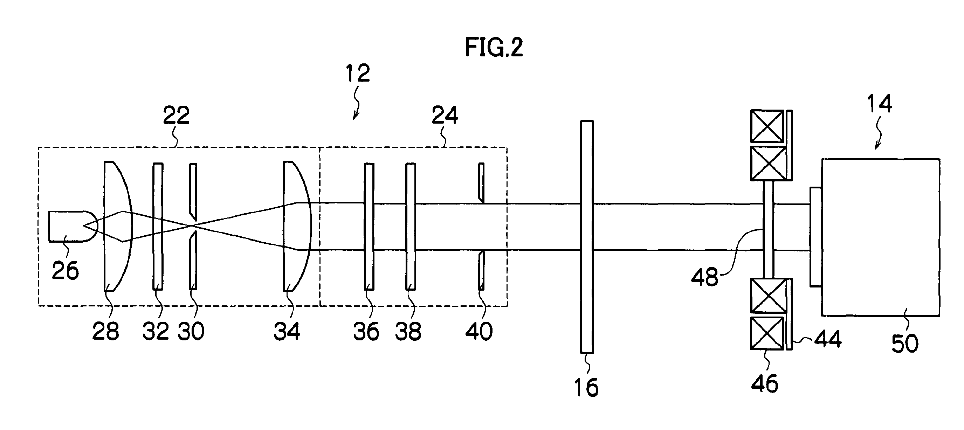

Fig. 1 shows one example of an entire constitution of a birefringence measurement apparatus of the present invention. Fig. 2 is a block diagram of an optical system of the birefringence measurement apparatus, which shows the case using circularly polarized light of a rotative analyzer method as a phase difference detecting method.

As shown in Figs. 1 and 2, in a birefringence measurement apparatus 10 of the present invention, for example, a sample 16 such as an optical film is measured by being disposed between a projector 12 and a light receiver 14. The measurement data is sent to a computer 20 via a controller 18 and is subjected to data processing as shown in Fig. 1. The controller 18 performs light source power supply control of the projector and control of the light receiver.

As shown in Fig. 2, the projector 12 is constituted of a light source unit 22 and a light polarizing part 24.

The light source unit 22 is constituted of an LED (light emitting diode) 26, a light splitting device which splits light beams emitted from the LED 26, a light condensing device which condenses the light beams emitted from the LED 26, and a parallel light forming device which converts the condensed light beams into parallel light. For the LED 26, a red LED with a light emission center wavelength of 633 nm, for example, can be preferably used.

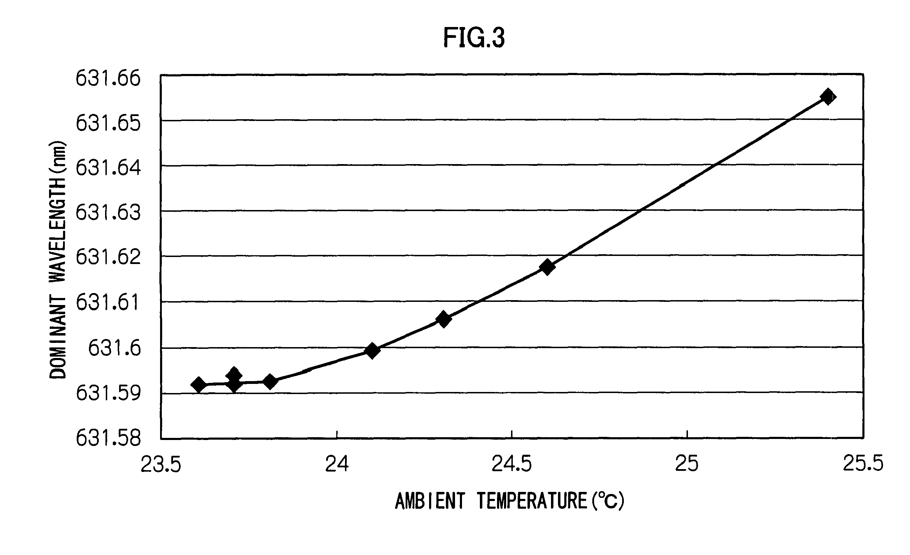

Namely, the light beams emitted from the LED 26 are guided to a first plano-convex lens 28 (light condensing device) first, and diverging light beams of the LED 26 are condensed to a pin hole plate 30 (aperture stop). The light beams passing through the first plano-convex lens 28 are guided to a light splitting filter 32 (light splitting device) disposed between the LED 26 and the pin hole plate 30. The light beams of the LED 26 of which wavelength width is broad are limited by the wavelength width of the light splitting filter 32, and thereby, strict measurement wavelength (dominant wavelength) is specified. For example, spectrometry is performed in advance by combining the LED 26 and the light splitting filter 32, and the representative wave length is calculated, whereby the measurement wavelength can be uniquely determined. For example, by totaling up the light energy value of each width of 0.1 nm, and by dividing the total value by all the energy values, the dominant wavelength can be defined. The band width of the light splitting filter 32 in a half value width of 10 nm can be preferably used. The wavelength of the LED 26 changes by 0.1 nm per 1°C with the change in the ambient temperature (from the catalogue data of the LED used), but by using the light splitting filter 32 as shown in Fig. 3, the wavelength change can be suppressed to 0.05 nm or less per 1°C. In this embodiment, the light splitting filter 32 is placed between the LED 26 and the pin hole plate 30, but the position of the light splitting filter 32 is not limited to this, and it may be disposed, for example, behind a second plano-convex lens 34 which will be described later.

The light beams passing through the light splitting filter 32 are guided to the pin hole plate 30. The pin hole plate 30 is disposed in the focal length of the second plano-convex lens 34 disposed behind like this, and thereby, parallel light can be taken out from the light beams emitted from the LED 26. As the pin hole diameter of the pin hole plate 30 is smaller, the parallelism of the parallel light is enhanced, and the pin hole diameter of, for example, $\phi$0.4 mm can be used. By this pin hole plate 30 and the second plano-convex lens 34, a parallel light forming device that converts the light beams, which are once condensed, into parallel light is constituted. The constitution in which the pin hole plate 30 is placed at the anterior focal point of the second plano-convex lens 34 is called a telecentric system, and can take out parallel light with high accuracy.

In this case, considering the condensing effect of the first plano-convex lens 28 for the LED 26, it is preferable to dispose the light emitting chip of the LED 26 to be practically the anterior focal point of the first plano-convex lens 28. Luminous flux coming from the first plano-convex lens 28 once condenses at a posterior focal point of the first plano-convex lens 28, and at this posterior focal point position, the pin hole plate 30 is disposed to allow only the parallel components to pass rearward, and the luminous flux coming from the pin hole plate 30 is returned to parallel light with the second plano-convex lens 34. Optical elements corresponding to a rotative analyzer method are disposed at a polarizing part 24 so as to achieve a phase difference detection method of the rotative analyzer method by the light beams returned to parallel light.

Namely, the light beams passing through the second plano-convex lens 34 are guided to a linearly polarizing plate 36 first. The light beam guided to the linearly polarizing plate 36 is parallel light, but natural light beam without polarization, and is converted into linearly polarized light along a transmission axis of the linearly polarizing plate 36 from natural light by the linearly polarizing plate 36. The light beam converted into the linearly polarized light is guided to a $\lambda/4$ wavelength plate 38 next. By disposing the $\lambda/4$ wavelength plate 38 so that a fast axis relatively inclines by 45°, or -45° with respect to the polarizing direction of the linearly polarized light, the linearly polarized light is converted into circularly polarized light. The $\lambda/4$ wavelength plate 38 is sued when circular polarized light is desired to be made, and is not necessary when linear polarized light is desired. This embodiment is the projector 12 in use for a rotative analyzer method, and includes the linearly polarizing plate 36 and the $\lambda/4$ wavelength plate 38. In a parallel nicols rotative analyzer method, the $\lambda/4$ wavelength plate 38 is not required, and a linear polarizer having a rotary mechanism is disposed. In a phase modulation method, in the constitution of the drawing, a rotary mechanism is provided at the $\lambda/4$ wavelength plate 38.

The light beams passing through the $\lambda/4$ wavelength plate 38 are guided to an emission aperture 40, and in the emission aperture 40, the beam diameter of the emission light emitted from the projector 12 is determined. By changing the diameter of the emission aperture 40, a desired beam diameter can be obtained, and the diameter of, for example, $\phi$5 mm can be favorably used. The light beams passing through the emission aperture 40 transmit through the sample 16 and are received by the light receiver 14.

The light receiver 14 is constituted of a rotary hollow motor 46 with a rotary encoder 44, a linearly polarizing plate 48 disposed at a central portion of the rotary hollow motor 46, and a photomultiplier tube (PMT) 50. The light beams emitted from the projector 12 are guided to the linearly polarizing plate 48, and only the light components along the transmission axis of the linearly polarizing plate 48 are passed, of the light beams incident on the linearly polarizing plate 48. The light beams passing through the linearly polarizing plate 48 are received by the photomultiplier tube (PMT) 50. The rotary hollow motor 46 is a hollow motor which can transmit light in a center because it does not have a rotary shaft in the center, and can rotate by 360° with the linearly polarizing plate 48 mounted to the center portion of the rotary hollow motor 46. In the case of rotative analyzer method, light intensity at the azimuth of the semi-periphery or at the azimuth of the entire periphery is obtained by changing azimuth by a very small angle (for example, 0.1° or the like) while rotating the linearly polarizing plate 48. Thereby, distribution of the optical output in whole azimuth at 360° can be measured, and the polarizing state of the incident light incident on the light receiver 14 can be known. The rotary encoder 44 detects the present angle position of the rotary hollow motor 46, and thereby, the present azimuth of the transmission axis of the linearly polarizing plate 48 is known. Accordingly, the polarizing state of light with respect to the reference angle can be shown, and a rotary encoder of, for example, 4000 pulses per round can be preferably used. As the detail will be described later, the photomultiplier tube 50 can measure a very week optical signal with low noise, has a small light quantity as the LED, and can obtain sufficient sensitivity for performing measurement with high accuracy in the light receiver 14 in combination with the above described condensing device.

Since the life of the measurement light source can be increased to be semi-permanent by making the birefringence measurement apparatus 10 have the above described constitution in the present invention as above, not only the replacement operation of the measurement optical source is eliminated, but also the following subsidiary effect is provided. Namely, by the constitution of the above described light source unit 22, the luminous flux is not enlarged even when the distance between the projector 12 and the light receiver 14 is long, and the use efficiency of the luminous flux can be enhanced. By using the PMT (photomultiplier tube) for the light receiver, sufficient sensitivity can be obtained. Therefore, the distance between the projector 12 and the light receiver 14 can be made as long as 300 mm, and thereby, "physical interference with the long-sized sample" which is feared in the conventional birefringence measurement apparatus can be reliably prevented.

(Rotative Analyzer Method)

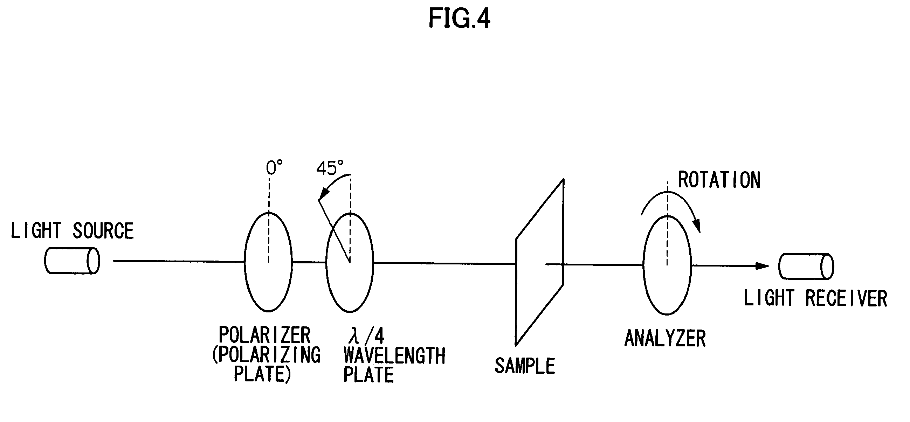

The rotative analyzer method is the method for measuring the polarizing state of light by placing a rotating analyzer (polarizing plate) in front of the light receiver 14 (light measuring device) and measuring the intensity distribution of light of the entire circumference at 360°. When this method is applied to a birefringence measurement apparatus, light of which polarizing state is known (for example, circularly polarized light, linearly polarized light or the like) is irradiated to a sample (optical film), and the polarization state of the light after passing through the sample is found, whereby the degree of birefringence and the axis azimuth of the sample can be determined. Fig. 4 is a view of the case using the circularly polarized light, and the light transmitting through the polarizer (polarizing plate) of which transmission axis is aligned with 0° becomes the linearly polarized light at the azimuth of 0°. When the linearly polarized light passes through the λ/4 wavelength plate placed with the fast axis at 45°, for example, it becomes circularly polarized light. The circularly polarized light passes through the sample, and thereby, is changed to elliptically polarized light since retardation which the sample has acts on the polarized light. The sample having birefringence has the azimuth at which the refractive index is the maximum and the azimuth at which the refractive index is the minimum. The azimuth with the maximum refractive index is called a slow axis, whereas the azimuth with the minimum refractive index is called a fast axis. The phase difference of the wave of light vibrating in the slow axis azimuth and the wave of light vibrating in the fast axis azimuth is retardation. The axis azimuth is an important measurement item as retardation, and in the case of rotative analyzer method, by measuring elliptically polarized light, both the axis azimuth and retardation of the sample can be determined.

(Photomultiplier Tube)

A photomultiplier tube (PMT) is an optical sensor of an electronic tube type with high sensitivity in which a photoelectric surface, a focusing electrode, an electronic multiplier part and an anode (electrode collecting electrons) are housed in a vacuum tube. The photomultiplier tube has the characteristics of having a high S/N ratio (less noise) as compared with optical sensors of semiconductors (photodiodes, phototransistors, CCD) and the like, high sensitivity (capable of detecting very weak light), high responsiveness (change in light quantity immediately appears in output) and the like. When light impinges on the photoelectric surface, photoelectrons are emitted into a vacuum from the photoelectric surface, the photoelectrons are guided to the electronic multiplier part by the focusing electrode, and is multiplied (increased) by the secondary electron emission effect. The photomultiplier tube has high sensitivity by multiplying (to one million times to ten million times as many as) photoelectrons by utilizing the secondary electron emission effect, and can further include various excellent characteristics such as fast time response characteristic.

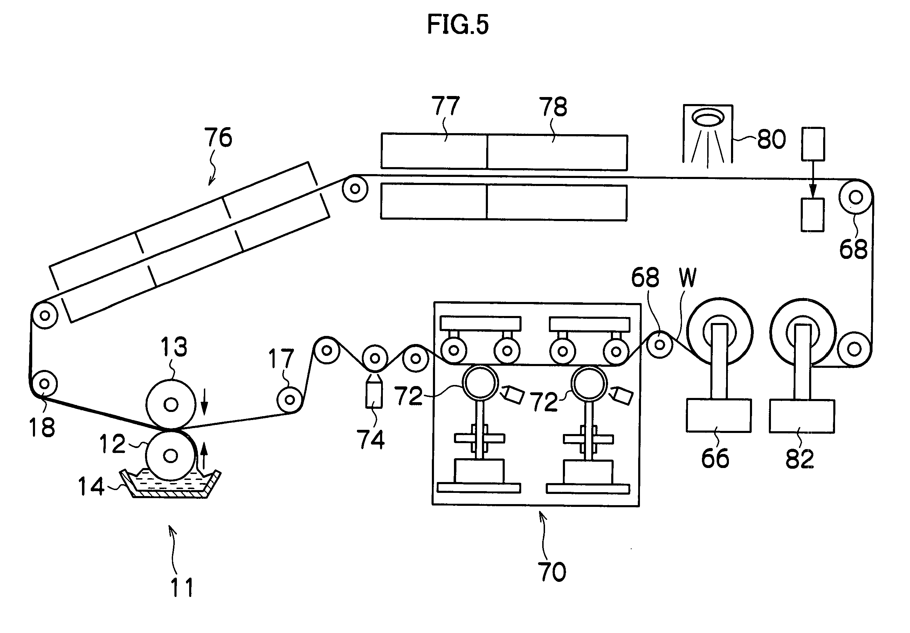

Fig. 5 is one example in which the birefringence measurement apparatus 10 of the present invention is incorporated into a manufacture line of an optical compensation film (sample) from which predetermined birefringence is required.

As shown in Fig. 5, in the manufacture line of the optical compensation film, a web W which is a transparent base on which a polymer layer for forming an alignment layer is formed in advance is fed from a feeding machine 66. The web W is fed into a rubbing treatment device 70 by being guided by a guide roller 68. Rubbing rollers 72 are provided to apply rubbing treatment to the polymer layer. At a downstream from the rubbing roller 72, a dust removing machine 74 is provided, and removes dust adhering to the surface of the web W. A gravure coating device 11 is provided at a downstream of the dust removing machine 74, and coats the web W with a coating solution including disconematic liquid crystal. At a downstream of the coating device, a drying device 76 which performs drying immediately after coating, a post-drying device 77 and a heating device 78 are provided in sequence, and a liquid crystal layer is formed on the web W. Further, at a downstream of this, an ultraviolet lamp 80 is provided, and by ultraviolet irradiation, the liquid crystal is cross-linked to form a desired polymer. By a winder 82 provided at a downstream of this, the web W on which the polymer is formed is wound up. Thereby, the optical compensation film 16 (sample) having the predetermined birefringence is manufactured. In Fig. 5, the web W after treated with the ultraviolet lamp 80 is shown as the optical compensation film 16. In the above described manufacture line, the birefringence measurement apparatus 10 of the present invention is disposed between the ultraviolet lamp 80 and the winder 82 to measure the birefringence of the optical compensation film 16 (sample).

The light source unit of such a birefringence measurement apparatus 10 is constituted of the LED 26, the light splitting device which splits the light beams emitted from the LED 26, the condensing device which condenses the light beams emitted from the LED 26, and the parallel light forming device which converts the condensed light beams into parallel light, and therefore, the life of the measurement light source can be increased to be semi-permanent. Thereby, the replacement operation of the measurement light source can be eliminated, and maintainability can be enhanced. In addition, the measurement accuracy equal to the one by the apparatus using a He-Ne laser light source can be obtained. The manufacture line is usually placed in the clean room, and since the light source does not need to be replaced, the operator is free from inconvenience of changing clothes to the clothes for the clean room.

Next, a measurement method for measuring retardation and axis azimuth of the optical compensation film 16 (sample) by the birefringence measurement apparatus 10 of the present invention will be described.

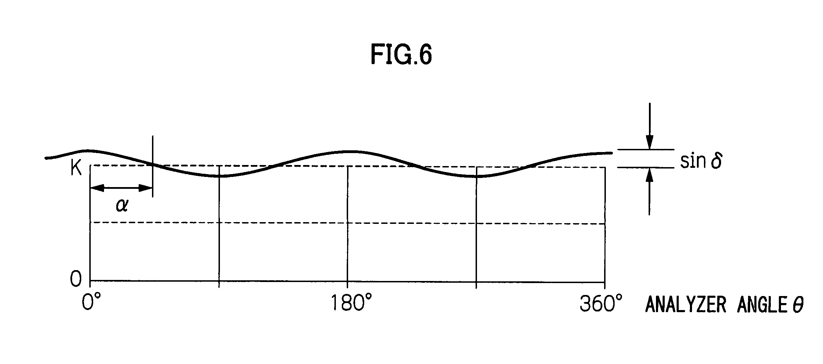

For explanation, XY-axes are virtually set in a space. The traveling direction of light (optical axis) is assumed to be horizontal, the direction perpendicular to the optical axis is set as a Y-axis, and the direction orthogonal to the optical axis and in the horizontal direction is set as an X-axis. The transmission axis of the first linearly polarizing plate 36 provided in the projector 12 is set to be aligned with the X-axis direction. Next, about the λ/4 wavelength plate 38, it can be set so that the fast axis becomes -45° (the irradiation light is left-handed circularly polarized light), and it can be set so that the fast axis becomes 45° (the irradiation light is right-handed circularly polarized light). Here, the case where the λ/4 wavelength plate 38 is placed so that the fast axis becomes -45° will be described. When the retardation of the optical compensation film is set at $\delta°$, and the fast axis azimuth is set at $\alpha°$, the signal of the light receiver 14 is as shown in Fig. 6, and can be expressed by the following formula.

$$\text{optical output} = K \cdot \{1 - \sin\delta \cdot \sin(2\theta t - 2\alpha)\} \ \dots \ \text{formula 1}$$

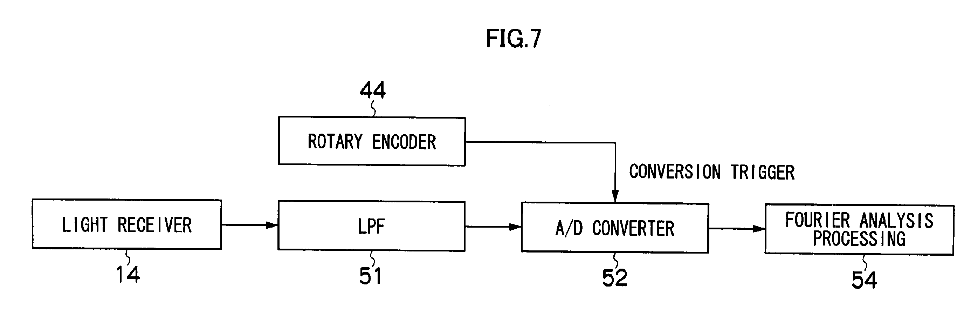

$\theta$ is a rotational angular speed of the analyzer (linearly polarizing plate 48) provided at the light receiver. As shown in Fig. 7, as the rotary encoder 44 attached to the rotary hollow motor 46 that rotates the linearly polarizing plate 48 (analyzer), the rotary encoder which generates 4000 pulses per round is used. Pulse of the rotary encoder 44 is set as the trigger of the A/D converter 52 to acquire datum of one point per pulse, and the above described signal is sampled with data of 4000 points. In this manner, the waveform of one rotation of the analyzer becomes the enumeration of digital data of 4000 points. DFT (discrete Fourier transform) is performed for the data row, and Fourier analysis processing 54 is performed. Reference numeral 51 in Fig. 7 designates an LPF (low pass filter).

Expanding the above described formula 1, formula 2 shown as follows is obtained.

$$\text{optical output} = K - K \cdot \sin\delta \cdot \cos 2\alpha \cdot \sin 2\theta t + K \cdot \sin\delta \cdot \sin 2\alpha \cdot \cos 2\theta t \ \dots \ \text{formula 2}$$

DFT can be used for the acquired data row of 4000 points, and the $\sin 2\theta$ component and the $\cos 2\theta$ component of the above described $2\theta$ frequency can be obtained. When they are expressed as Isin and Icos, and the DC term of DFT is expressed as $I_{DC}$, formula 3, formula 4 and formula 5 shown as follows are obtained, and the axis azimuth $\alpha$ of the film can be obtained from $\tan 2\alpha = -\text{Icos/Isin}$.

$$I_{DC} = K \ \dots \ \text{formula 3}$$

$$\text{Isin} = -K \cdot \sin\delta \cdot \cos 2\alpha \ \dots \ \text{formula 4}$$

$$\text{Icos} = K \cdot \sin\delta \cdot \sin 2\alpha \ \dots \ \text{formula 5}$$

The retardation $\delta$ of the sample can be obtained from the relation of $K^2 \cdot \sin^2\delta = \text{Isin}^2 + \text{Icos}^2$. Here, K is determined by the amplification degree of the amplifier, light quantity of the light source and the like, but since K is not included in $\alpha$ and $\delta$ to be obtained, and therefore, it is found out that this system is not influenced even if the amplification degree of the amplifier and the light source intensity vary. The λ/4 wavelength plate 38 which is actually used does not give a precise phase difference of λ/4, but includes an error. Further, alignment of the angles of the λ/4 wavelength plate 38 and the linearly polarizing plate 36 is not performed to be -45° precisely, but includes an error. These errors can be confirmed by the fact that the light impinging on the optical compensation film 16 appears to be elliptically polarized light instead of circularly polarized light. Further, an extinction ratio P exists in the linearly polarizing plate 36 and the linearly polarizing plate 48. When the passing light intensity when both of them are in a parallel nicols state is set as a maximum intensity Imax, and the passing light intensity when both of them are in a cross nicols state is set as a minimum intensity Imin, the extinction ratio P is defined by P = (Imax-Imin)/(Imax+Imin), and can be measured. The ideal state is P = 1, but actually P is 1 or less. The extinction ratio P is also called a polarization degree, and shows the ratio of the completely polarized light components included in irradiated light. In order to perform right measurement by reflecting these errors in the measuring quantity, irradiation light is measured by rotating the linearly polarizing plate 48 of the light receiver 14 without the optical compensation film 16 first. When the DC component at the time of measurement without the optical compensation film 16 is set as K', the sin component and the cos component of $2\theta$ frequency are set as Isin' and Icos' respectively,

$$Isin'/K' = Y \dots \text{formula 6,}$$

and

$$Icos'/K' = X \dots \text{formula 7}$$

are set up, and $Z = -\sqrt{\{P^2-X^2-Y^2\}}$ is defined, the determinant

$$\begin{vmatrix} 1 \\ X \\ Y \\ Z \end{vmatrix}$$

expresses the Stokes parameter of irradiation light of the projector 12.

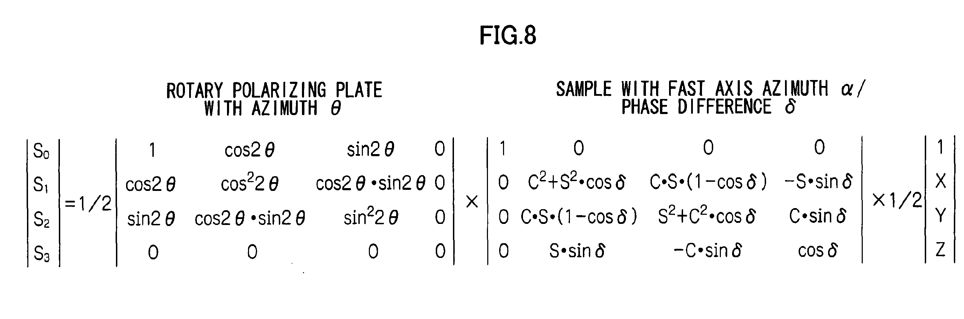

When the Stokes parameter is used for Mueller matrix expression of the rotative analyzer method, the determinant shown in Fig. 8 is obtained. In Fig. 8, $S = \sin 2\alpha$, and $C = \cos 2\alpha$.

The value of So of the determinant in Fig. 8 is detected optical output, and is expressed by formula 10.

$$S_0 = 1/4 \cdot K \cdot (1 + \cos 2\theta \cdot \{(C^2 + S^2 \cdot \cos\delta) \cdot X + C \cdot S \cdot (1 - \cos\delta) \cdot Y - S \cdot \sin\delta \cdot Z\} + \sin 2\theta \cdot \{C \cdot S \cdot (1 - \cos\delta) \cdot X + (S^2 + C^2 \cdot \cos\delta) \cdot Y + C \cdot \sin\delta \cdot Z\}) \dots \text{formula 10,}$$

where K is an amplifier constant in the actual measuring system, and is a constant. By performing Fourier analysis of the cos component and the sin component of the angle frequency of the rotative analyzer, the signal of the optical output can be measured as the signal with the coefficients of $\cos 2\theta$ and $\sin 2\theta$ as Icos and Isin. By using the result, the sample axis azimuth $\alpha$ and the retardation $\delta$ of the optical compensation film 16 can be calculated by the following formula 11 and formula 12.

$$\alpha = 1/2 \cdot \text{Tan}^{-1}\{(X - Icos)/(Isin - Y)\} \dots \text{formula 11}$$

$$\delta = \text{Asin}\{(C \cdot Isin - S \cdot Icos)/\sqrt{\{(-S \cdot X + C \cdot Y)^2 + Z^2\}}\} - \text{Atan}\{(-S \cdot X + C \cdot Y)/Z\} \dots \text{formula 12}$$

Note that $S = \sin 2\alpha$, $C = \cos 2\alpha$, and $Z = -\sqrt{\{P^2-X^2-Y^2\}}$ $\alpha$ can take a value from -90° to 90°, but is calculated in the range of -45° to 45° from formula 11. However, this can be correctly returned to the value from -90° to 90° from the signs of (X-Icos) and (Isin-Y).

When the $\lambda/4$ wavelength plate 38 is placed so that the fast axis becomes 45°, the retardation can be calculated by setting $Z = \sqrt{\{P^2-X^2-Y^2\}}$, and changing formula 12 to

$$\delta = \text{Asin}\{(S \cdot Icos - C \cdot Isin)/\sqrt{\{(-S \cdot X + C \cdot Y)^2 + Z^2\}}\} - \text{Atan}\{(-S \cdot X + C \cdot Y)/Z\} \dots \text{formula 13.}$$

[Example]

The birefringence measurement apparatus 10 (the present apparatus) using the LED light source of the present invention constituted as above, and the birefringence measurement apparatus (comparative apparatus) using the conventional He-Ne laser light source were compared.

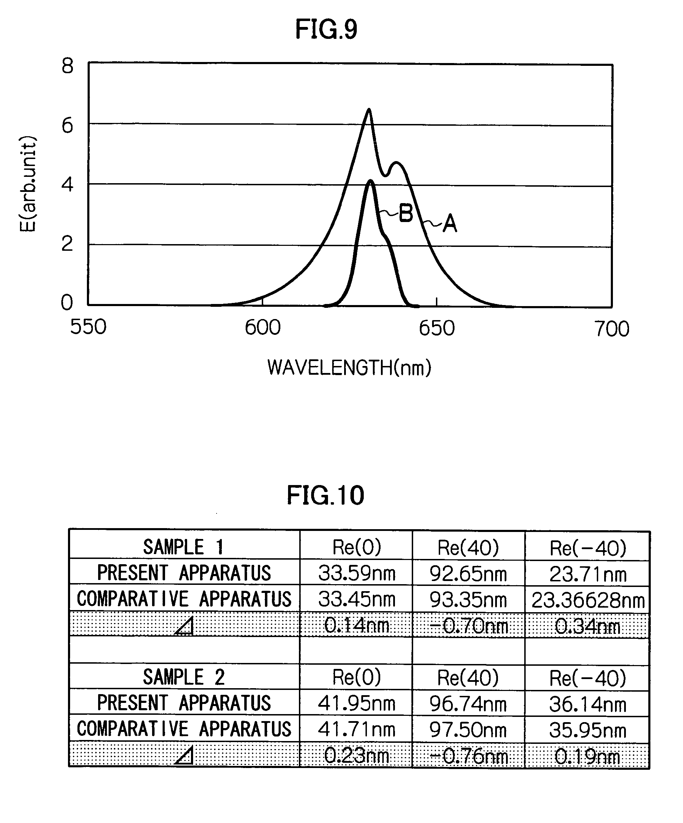

The birefringence measurement equipment of the present invention uses a red LED. Line A in Fig. 9 is the light emission wavelength from the LED, and line B is the wavelength after passing through the beam splitting filter 32. With respect to the projector wavelength, the dominant wavelength $\lambda d$ of the projector was calculated as $\lambda d = \Sigma(\Delta\lambda \cdot E\lambda)/E$. Here, $\Delta\lambda = 1$, $E\lambda$ = light intensity measured value of the wavelength$\lambda$, E = light intensity measured value of the projector light emitted from the projector. With respect to the optical films (sample) with the same retardation, the measurement result with the rotative analyzer method of the birefringence measurement apparatus using the LED light source of the present invention, and the measurement result of the birefringence measurement apparatus of the comparative example using the He-Ne laser were compared. About the retardation (Re) of the optical film (sample), with respect to samples 1 and 2 differing in material, measurement was carried out with respect to the three levels that are the case of retardation of zero (retardation of the sample for the light with an incident angle of 0°, Re (0) in Fig. 10), the case of retardation of 40 (retardation of the sample for the light with an incident angle of 40°, Re (40) in Fig. 10) and the case of retardation -40° (retardation of the sample for the light with an incident angle of -40°, Re(-40) in Fig. 10).

The comparison result is shown in the table in Fig. 10.

As is understood from the table in Fig. 10, the measurement results are substantially the same with the birefringence measurement apparatus of the LED light source of the present invention and the birefringence measurement apparatus using the He-Ne laser light source of the comparative example, and the measurement accuracy of the birefringence measurement apparatus of the present invention using the LED as the light source is found out to have no problem practically. Accordingly, the birefringence measurement apparatus of the invention of the present application can increase the life of the measurement light source to be semipermanent, and therefore, replacement operation of the measurement light source can be eliminated. Thereby, the readjustment operations at the time of replacement such as offset measurement and calibration measurement are not required, and therefore, maintainability can be remarkably enhanced. In addition, the effect of being able to obtain the measuring accuracy equal to that by the birefringence measurement apparatus using the He-Ne laser light source in spite of using the LED, which has not been conventionally obtained, can be provided.

**Claims**

1. A birefringence measurement apparatus (10) having a projector (12) and a light receiver (14), **characterized in that** a light source unit (22) of the projector (12) includes:

   an LED (26);
   a light splitting device (32) which splits light beams emitted from the LED (26);
   a light condensing device (28) which condenses light beams emitted from the LED (26); and
   a parallel light forming device (30), (34) which converts the condensed light beams into parallel light.

2. The birefringence measurement apparatus (10) according to claim 1, **characterized in that** a photoelectron multiplying device (50) is provided in the light receiver (14).

3. The birefringence measurement apparatus (10) according to claim 1 or 2, **characterized in that** a phase difference detecting method of the birefringence measurement apparatus (10) is any one of a parallel nicols rotative analyzer method, a rotative analyzer method, and a Senarmont method.

## FIG.1

EP 1 847 826 A1

FIG.2

EP 1 847 826 A1

# FIG.3

# FIG.4

EP 1 847 826 A1

FIG.5

EP 1 847 826 A1

EP 1 847 826 A1

## FIG.6

# FIG.7

EP 1 847 826 A1

## FIG.8

$$
\begin{vmatrix} S_0 \\ S_1 \\ S_2 \\ S_3 \end{vmatrix} = 1/2
\overset{\text{ROTARY POLARIZING PLATE}}{\underset{\text{WITH AZIMUTH } \theta}{
\begin{vmatrix}
1 & \cos2\theta & \sin2\theta & 0 \\
\cos2\theta & \cos^2 2\theta & \cos2\theta\cdot\sin2\theta & 0 \\
\sin2\theta & \cos2\theta\cdot\sin2\theta & \sin^2 2\theta & 0 \\
0 & 0 & 0 & 0
\end{vmatrix}}}
\times
\overset{\text{SAMPLE WITH FAST AXIS AZIMUTH } \alpha /}{\underset{\text{PHASE DIFFERENCE } \delta}{
\begin{vmatrix}
1 & 0 & 0 & 0 \\
0 & C^2+S^2\cdot\cos\delta & C\cdot S\cdot(1-\cos\delta) & -S\cdot\sin\delta \\
0 & C\cdot S\cdot(1-\cos\delta) & S^2+C^2\cdot\cos\delta & C\cdot\sin\delta \\
0 & S\cdot\sin\delta & -C\cdot\sin\delta & \cos\delta
\end{vmatrix}}}
\times 1/2
\begin{vmatrix} 1 \\ X \\ Y \\ Z \end{vmatrix}
$$

EP 1 847 826 A1

## FIG.9

## FIG.10

| SAMPLE 1 | Re(0) | Re(40) | Re(−40) |
|---|---|---|---|
| PRESENT APPARATUS | 33.59nm | 92.65nm | 23.71nm |
| COMPARATIVE APPARATUS | 33.45nm | 93.35nm | 23.36628nm |
| △ | 0.14nm | −0.70nm | 0.34nm |
| | | | |
| SAMPLE 2 | Re(0) | Re(40) | Re(−40) |
| PRESENT APPARATUS | 41.95nm | 96.74nm | 36.14nm |
| COMPARATIVE APPARATUS | 41.71nm | 97.50nm | 35.95nm |
| △ | 0.23nm | −0.76nm | 0.19nm |

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 4 908 507 A (IMRE DOBI [HU] ET AL) 13 March 1990 (1990-03-13) * column 1, lines 36-40; figure 1 * * column 3, lines 11-41 * | 1-3 | INV. G01N21/23 |
| Y | US 2005/122514 A1 (JANG HO F [CA]) 9 June 2005 (2005-06-09) * paragraphs [0003], [0071]; figure 3 * | 1-3 | |
| A | DE 10 2004 051247 B3 (THUERINGISCHES INST TEXTIL [DE]) 6 April 2006 (2006-04-06) * paragraphs [0001], [0024] * | 1-3 | |
| A | US 6 317 209 B1 (PRIESTLEY RICHARD S [US]) 13 November 2001 (2001-11-13) * column 2, lines 8-12 * * column 3, line 62 - column 4, line 7 * | 1-3 | |
| A | US 2002/030823 A1 (KOBAYASHI RYO [JP] ET AL) 14 March 2002 (2002-03-14) * paragraphs [0002], [0049], [0056] * | 1 | |
| A | WO 2004/057314 A (FISO TECHNOLOGIES INC [CA]; PINET ERIC [CA]; DUPLAIN GAETAN [CA]) 8 July 2004 (2004-07-08) * paragraphs [0022], [0023], [0055], [0058], [0074]; claim 17 * | 1 | TECHNICAL FIELDS SEARCHED (IPC) G01N G01J G01B |
| A | US 2002/135766 A1 (DARROW CHRIS [US] ET AL) 26 September 2002 (2002-09-26) * paragraphs [0014], [0018], [0027] * | | |
| A | US 6 190 153 B1 (TSUZUKIYAMA KOJI [JP] ET AL) 20 February 2001 (2001-02-20) * abstract; figure 1 * | 1 | |

The present search report has been drawn up for all claims

| Place of search | Date of completion of the search | Examiner |
|---|---|---|
| Berlin | 20 August 2007 | Brison, Olivier |

EPO FORM 1503 03.82 (P04C01)

## ANNEX TO THE EUROPEAN SEARCH REPORT
## ON EUROPEAN PATENT APPLICATION NO.

EP 07 00 7779

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2007

| Patent document cited in search report | | Publication date | Patent family member(s) | | Publication date |
|---|---|---|---|---|---|
| US 4908507 | A | 13-03-1990 | CH | 673535 A5 | 15-03-1990 |
| | | | DE | 3705143 A1 | 17-09-1987 |
| | | | HU | 203598 B | 28-08-1991 |
| US 2005122514 | A1 | 09-06-2005 | NONE | | |
| DE 102004051247 | B3 | 06-04-2006 | WO | 2006042524 A1 | 27-04-2006 |
| US 6317209 | B1 | 13-11-2001 | TW | 503314 B | 21-09-2002 |
| | | | WO | 0142750 A1 | 14-06-2001 |
| US 2002030823 | A1 | 14-03-2002 | DE | 10136197 A1 | 07-02-2002 |
| | | | JP | 2002107119 A | 10-04-2002 |
| | | | KR | 20020009512 A | 01-02-2002 |
| | | | TW | 479127 B | 11-03-2002 |
| WO 2004057314 | A | 08-07-2004 | AU | 2003294535 A1 | 14-07-2004 |
| | | | CA | 2509909 A1 | 08-07-2004 |
| | | | US | 2006141466 A1 | 29-06-2006 |
| US 2002135766 | A1 | 26-09-2002 | NONE | | |
| US 6190153 | B1 | 20-02-2001 | CN | 1198377 A | 11-11-1998 |
| | | | EP | 0875359 A2 | 04-11-1998 |
| | | | JP | 3858101 B2 | 13-12-2006 |
| | | | JP | 11010728 A | 19-01-1999 |
| | | | TW | 436420 B | 28-05-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6229912 A

- JP 8327498 A